# EUROPEAN PATENT SPECIFICATION

(11) **EP 0 963 254 B1**
(45) Date of publication and mention of the grant of the patent: **23.01.2002**
(21) Application number: 96935764.9
(22) Date of filing: 28.10.1996
(51) Int. Cl.: B02C 23/08

(54) **METHOD FOR PRODUCING A LIME PRODUCT FROM MUSSEL- AND/OR SEASHELLS**
VERFAHREN ZUM HERSTELLEN EINES KALK-PRODUKTS AUS MUSCHELN ODER DERGLEICHEN
PROCEDE DE FABRICATION D'UN PRODUIT A BASE DE CALCAIRE A PARTIR DE COQUILLES DE MOULES OU D'AUTRES COQUILLES OU CARAPACES D'ANIMAUX MARINS

(30) Priority: 26.10.1995 SE 9503775
(43) Date of publication of application: 15.12.1999
(73) Proprietor: Caravan Mill AB, 520 50 Stenstorp (SE)
(72) Inventor: JAKOBSSON, Peder, S-520 50 Stenstorp (SE)
(74) Representative: Karlsson, Leif Karl Gunnar
(86) International application number: SE9601380
(87) International publication number: WO9715398

(56) References cited:
- DK-A- 9 201 253
- SE-B- 466 294

## Description

### FIELD OF INVENTION

The present invention relates to the production of lime products for treating, for instance, acidified arable land, lakes, for applying nutrients to gardens, etc., and also for use as an industrial product in the manufacture of plastic and rubber products, chalk products and cement. The expression "mussel and/or seashells" is also meant to include the shells of other marine animals, such as crabs, shrimps and cuttle-fish.

### BACKGROUND OF THE INVENTION

Mussel shells and seashells are at present deposited in fish processing plants in quantities of about 1,000 tonnes of shell/year and upwards from each plant. Attempts have been made to recover the shells by crushing them in a wet state and then drying the shells. The drying power required to this end is considerable, due to the fact that the crushed shells bind more water than shells that have not been crushed.

Danish Patent Application 9201253 gives indication of a method of producing lime products by air-drying mussel shells. These mussel shells are coarsely crushed prior to air-drying the shells, with the intention of avoiding collecting an unnecessary large amount of water. After being air-dried, the coarsely crushed shells are ground to a final lime product. The drawback with this method is that it cannot be applied for rational production, since the first coarse-crushing stage produces shell fragments that bind more water than do whole shells, and because the following air-drying process cannot be controlled in a rational manner. Furthermore, the shell fragments are not dried to a sufficient degree of dryness, wherewith shell residues stick together in the subsequent grinding process.

Recovery of the shells requires that the shells can be ground when in a dry state, which is possible according to the present invention.

Lime is used traditionally to combat acidification in lakes and waterways. Powdered lime deriving from limestone quarries or chalk pits is used in order to achieve the best possible effect. One method of application is to disperse lime from an helicopter. This method results in over-liming of the recipient surface, i.e. more lime is spread than is actually needed, due to wind drift and the solubility of the powdered lime.

The powdered mussel shells and seashells recovered in accordance with the invention have a higher solubility than conventional powdered lime.

Mussel shells and seashells, on the other hand, are younger and have a higher solubility, therewith enabling coarser powder fractions to be used. (Fractions that are up to 100 times coarser than conventional lime, although with the same resultant effect.) This enables spreading of the product to be better controlled. Thus, it is not necessary to use more material than is necessary. Laboratory tests have shown mussel shells and seashells to have a more widespread effect. Powdered mussel shells and seashells also lie closer to the ecological chain.

### OBJECTS OF THE INVENTION

One object of the present invention is to provide a method for producing lime products in a simpler and more rational manner than has earlier been possible. The invention also overcomes the disadvantages of earlier methods and processes.

Another object of the invention is to provide a process which enables mussel shells and seashells to be recovered in the form of powdered products, for instance. The powder obtained is able to replace traditional lime, which is millions of years old and must be blasted loose in limestone quarries and then crushed and ground down to powder form. Powdered mussel shells and seashells can also be used within ecological agriculture.

Another object of the invention is to provide a method of manufacturing lime products that constitute an intermediate product in the manufacture of cement.

### SUMMARY OF THE INVENTION

The present invention relates to a method of producing a lime product and also a lime product produced in accordance with the method, wherein lime-rich mussel shells and/or seashells are first dried to an intended residual moisture content by heating, and then crushed in a first crushing stage to a predetermined fraction which is sieved in a first sieving stage to
i) a coarse fraction which circulates in the manufacturing process by being continuously recycled to the first crushing stage; and
ii) at least one fine fraction which forms the final lime product.

### DESCRIPTION OF THE INVENTION

The process is based technically on drying, crushing and grinding mussel shells and seashells in equipment developed to this end. Raw mussel shells and seashells are delivered from a plant, e.g. on conveyor belts, in which they have been cooked and the shell content packaged as foodstuff. The mussel shells and seashells are taken as waste products from the foodstuff processing station and delivered to a rotary drier in which water and fat is dried-off. The dried shells are then delivered to a mill which is loaded with hammers and gratings or grids. The shells are crushed and ground in the mill. Owing to the differing natures of respective shells, not all of the shells delivered to the mill will represent a finished product in the first stage, and the shells are therefore sieved and an insufficiently ground products returned. These shells play an important part in the circuit system of the grinding process. Finished products can be removed either in bulk or in large sacks from an outgoing screw conveyor in the plant.

In an alternative embodiment of the drying process, suited for operation on a large scale, the mussel shells are delivered through an infeed hopper which controls the amount of shells delivered, and are then fed on a belt conveyor into and through the drying section along a vibrating chute in which the shells are thrown forwards while being dried by one or more gas fed infrared lamps, up to 30-40 lamps, of the gasol kind placed along the chute and irradiating and drying the shells from above. The lamps are of the kind used in the concrete and asphalt industry and each have a power of 13 kW or more and generate a temperature of about 900°C at normal distances. The vibrating chute is provided with a reflective stainless metal bottom surface and a net spaced above said surface, the net functioning to support the shells so that the shells will be heated from all directions.

As the shells are heated they are dried to an intended residual moisture content, which is reached when the shells begin to pop or split. The shells are then so brittle and so overheated that no vapour and fat will remain. Other organic nitrogenous residual material such as animal rests is dried at the same time and will material such as animal rests is dried at the same time and will not therefore disturb the following crushing or grinding process. The shells will have a maximum residual moisture content of about 0.5-0.7% and in all events lower than 1%, this residual moisture content being necessary in order for the process to function satisfactorily. Quality, i.e. residual moisture content, can also be discerned by the colour of the product.

Subsequent to the shells passing through the drier, the shells are fed successively into the crusher in which they are ground. The shells are disintegrated in a first crushing stage to a predetermined fraction. This fraction is delivered by a screw conveyor to a sieve or screen which produces a coarse fraction in a first sieving stage, this fraction circulating in the manufacturing process by being continuously recycled to the first crushing stage, and at least one fine fraction which constitutes the final lime product. In this regard, a final lime product may be a fraction in which about 80% of the particles are smaller than 0.6 mm in size. The hammer crusher must be replaced with a ball mill if finer fractions are required. The finished product is delivered, e.g., by a screw conveyor, to so-called big bags or to a hopper for vehicle transportation to customers. Circulation of the coarse fraction is important in obtaining a crushable mass that contains much less air than those shells that are first fed into the mill. Depending on the size of the shells, this mass is 250-350 kg/m³, whereas the mass of the end product is 1000-1600 kg/m³.

In a further embodiment of the invention, the first sieving stage is intended to produce a coarse fraction and also a number of fine fractions, for instance a further five fine fractions. At last one of these fine fractions is recycled together with the coarse fraction in the manufacturing process, whereas the remaining fine fractions are taken out as final lime products.

In yet another embodiment, part of the coarse fraction can be taken out of circulation as an alternative coarse fraction for further crushing in a second crushing stage to a predetermined fraction for further transportation to a second sieving stage in which said fraction is sieved to produce a coarse fraction which circulates in the manufacturing process, by being continuously recycled to the second crushing stage, and at least one fine fraction which constitutes an alternative final lime product.

Separation of a filter fraction is achieved in the crushing stage, by applying a suction effect through a filter. The fraction is blown from the filter with the aid of compressed air and is either returned to the process crushing stage or permitted to constitute a separate final lime product. This enables two separate final products to be obtained in one and the same process. Alternatively, the filter fraction can be mixed with the final lime product to obtain a third product.

The process constitutes a closed system which can be controlled totally from without. The equipment in which dry grinding of mussel shells and seashells takes place is either mobile or static. The plant is powered from an electricity supply centre equipped with a computer.

In another embodiment of the invention, the mussel shells and/or the seashells are dried in a microwave oven which thus replace the aforedescribed gas fed infralamps. Electric infralamps can also be used as a drying source in the inventive method.

It will be understood that the invention is not restricted to the embodiments presented in this document and that modifications can be made within the scope of the following Claims and therewith provide numerous other embodiments.

## Claims

1. A method of producing a lime product from mussel shells and/or seashells, **characterized in that** the mussel shells and/or seashells are,
a) dried to an intended residual moisture content lower than 1% by heating;
b) crushed to a predetermined fraction in a first crushing stage; and separating a filter fraction in the first crushing stage, wherein, after the crushing stage, the fraction is either returned or constitutes a separate final lime product;
c) sieved in a first sieving stage to obtain,
i) a coarse fraction which circulates in the manufacturing process by being continually returned to the first crushing stage; and
ii) at least one fine fraction which constitutes a final lime product.

2. A method according to Claim 1, **characterized by** drying the mussel shells and/or seashells in a rotary drier.

3. A method according to Claim 1, **characterized by** passing the mussel shells and/or seashells through a drying section that includes at least one gasol-driven infralamp, such as to dry said shells.

4. A method according to Claim 3, **characterized by** feeding the mussel shells and/or the seashells from an inlet hopper onto a belt conveyor and into and through the drying section along a vibrating chute.

5. A method according to Claim 4, **characterized by** providing the vibrating chute with a reflective bottom surface and a net placed above said surface, such as to heat the mussel shells and/or seashells from all directions.

6. A method according to any one of the preceding Claims, **characterized in that** the first sieving stage is adapted to produce a coarse fraction and a further number of fine fractions.

7. A method according to Claim 6, **characterized by** circulating the coarse fraction together with at least one of said fine fractions in the manufacturing process, wherein remaining fine fractions constitute final lime products.

8. A method according to any one of the preceding Claims, **characterized by** taking a part of the coarse fraction out of circulation as an alternative coarse fraction for further crushing in a second crushing stage to a predetermined fraction for further transportation to a second sieving stage, in which said fraction is sieved to obtain,
i) a coarse fraction which circulates in the manufacturing process by being continually returned to the second crushing stage; and
ii) at least one fine fraction which constitutes an alternative final lime product.

9. A liming agent produced by the method according to any one of the preceding Claims.

## Patentansprüche

1. Verfahrung zum Erzeugen eines Kalkprodukts aus Muschelschalen und/oder Schalen anderer Meerestiere, **dadurch gekennzeichnet, dass** die Muschelschalen und/oder Schalen anderer Meerestiere
a) durch Erhitzen auf einen beabsichtigten Restfeuchtigkeitsgehalt unter 1% getrocknet werden,
b) auf einen vorbestimmten Anteil in einer ersten Zerstoßstufe zerstoßen werden; und ein Filteranteil in der ersten Zerstoßstufe getrennt wird, wobei, nach der Zerstoßstufe, der Anteil entweder zurückgeführt wird oder ein getrenntes Kalkendprodukt bildet;
c) in einer ersten Siebstufe gesiebt werden, um
i) einen groben Anteil, der in dem Herstellungsprozess durch kontinuierliche Rückführung zu der ersten Zerstoßstufe zirkuliert wird; und
ii) wenigstens einen feinen Anteil zu erhalten, der ein Kalkendprodukt bildet.

2. Verfahren nach Anspruch 1, **gekennzeichnet durch** Trocknen der Muschelschalen und/oder Schalen anderer Meerestiere in einem Rotationstrockner.

3. Verfahren nach Anspruch 1, **gekennzeichnet durch** Führen der Muschelschalen und/oder Schalen anderer Meerestiere **durch** einen Trocknungsabschnitt, der wenigstens eine benzinbetriebene Infralampe umfasst, um so die Schalen zu trocknen.

4. Verfahren nach Anspruch 3, **gekennzeichnet durch** Führen der Muschelschalen und/oder der Schalen anderer Meerestiere aus einem Einlasstrichter auf ein Förderband und in und **durch** den Trocknungsabschnitt entlang einer Vibrationsrinne.

5. Verfahren nach Anspruch 4, **gekennzeichnet durch** Versehen der Vibrationsrinne mit einer reflektierenden Bodenfläche und einem über dieser Oberfläche platzierten Netz, um so die Muschelschalen und/oder Schalen anderer Meerestiere von allen Richtungen zu erhitzen.

6. Verfahren nach einem der vorhergehenden Ansprüche, **dadurch gekennzeichnet, dass** die erste Siebstufe ausgelegt ist, um einen groben Anteil und eine weitere Anzahl feiner Anteile zu erzeugen.

7. Verfahren nach Anspruch 6, **gekennzeichnet durch** Zirkulieren des groben Anteils zusammen mit wenigstens einem der feinen Anteile in dem Herstellungsprozess, wobei restliche feine Anteile Kalkendprodukte bilden.

8. Verfahren nach einem der vorhergehenden Ansprüche, **gekennzeichnet durch** Herausnehmen eines Teils des groben Anteils aus der Zirkulation als einen alternativen groben Anteil zum weiteren Zerstoßen in einer zweiten Zerstoßstufe auf einen vorbestimmten Anteil für Weitertransport zu einer zweiten Siebstufe, in der der Anteil gesiebt wird, um
i) einen groben Anteil, der in dem Herstellungsprozess **durch** kontinuierliche Rückführung zu der zweiten Zerstoßstufe zirkuliert, und
ii) wenigstens einen feinen Anteil zu erhalten, der ein alternatives Kalkendprodukt bildet.

9. Kalkungsmittel, das durch das Verfahren gemäß einem der vorhergehenden Ansprüche erzeugt wird.

## Revendications

1. Procédé pour produire un produit calcaire à partir de coquilles de moules et/ou de coquillages, **caractérisé en ce que** les coquilles de moules et/ou coquillages sont,
a) séchés jusqu'à une teneur en humidité résiduelle prévue inférieure à 1% en chauffant ;
b) broyés en une fraction prédéterminée dans une première étape de broyage; et séparer une fraction filtrée dans la première étape de broyage, dans lequel après l'étape de broyage, la fraction est soit renvoyée soit constitue un produit calcaire final séparé ;
c) tamisés dans une première étape de tamisage pour obtenir,
i) une fraction grossière qui circule dans le procédé de fabrication en étant continuellement renvoyée vers la première étape de broyage ; et
ii) au moins une fraction fine qui constitue un produit calcaire final.

2. Procédé selon la revendication 1, **caractérisé par** le séchage des coquilles de moules et/ou coquillages dans un séchoir rotatif.

3. Procédé selon la revendication 1, **caractérisé par** le passage des coquilles de moules et/ou coquillages à travers une section de séchage qui comprend au moins une lampe à infrarouge fonctionnant au gasoil, de manière à sécher lesdites coquilles.

4. Procédé selon la revendication 3, **caractérisé par** l'alimentation des coquilles de moules et/ou des coquillages à partir d'une trémie d'entrée sur un convoyeur à bande et dans et à travers la section de séchage le long d'une goulotte vibrante.

5. Procédé selon la revendication 4, **caractérisé par** le fait de pourvoir la goulotte vibrante avec une surface de fond réfléchissante et un filet placé au-dessus de ladite surface, de manière à chauffer les coquilles de moules et/ou coquillages de toutes les directions.

6. Procédé selon l'une quelconque des revendications précédentes, **caractérisé en ce que** la première étape de tamisage est adaptée à produire une fraction grossière et d'autres fractions fines.

7. Procédé selon la revendication 6, **caractérisé par** la circulation de la fraction grossière ensemble avec au moins une desdites fractions fines dans le procédé de fabrication, dans lequel le restant des fractions fines constitue des produits calcaires finaux.

8. Procédé selon l'une quelconque des revendications précédentes, **caractérisé par** le fait de retirer une partie de la fraction grossière de la circulation en tant que fraction grossière alternative pour la broyer davantage dans une seconde étape de broyage en une fraction prédéterminée pour être ensuite transportée vers une seconde étape de tamisage, dans lequel ladite fraction est tamisée pour obtenir,
i) une fraction grossière qui circule dans le procédé de fabrication en étant continuellement renvoyée vers la seconde étape de broyage ; et
ii) au moins une fraction fine qui constitue un produit calcaire final.

9. Agent de chaulage produit par le procédé selon l'une quelconque des revendications précédentes.
